(19) **Europäisches Patentamt / European Patent Office / Office européen des brevets**

(11) **EP 4 763 494 A1**

(12) # EUROPEAN PATENT APPLICATION

(43) Date of publication:
**24.06.2026  Bulletin 2026/26**

(21) Application number: **24307267.5**

(22) Date of filing: **23.12.2024**

(51) International Patent Classification (IPC):
**B29D 11/00** (2006.01)    **G02B 1/04** (2006.01)
**G02B 1/14** (2015.01)

(52) Cooperative Patent Classification (CPC):
(C-Sets available)
**B29D 11/00009; B29D 11/00865; G02B 1/041; G02B 1/14**                (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Essilor International
94220 Charenton-Le-Pont (FR)**

(72) Inventors:
• **TELITEL, Siham
  94000 CRETEIL (FR)**
• **BOUANHAK, Louiza
  93110 ROSNY-SOUS-BOIS (FR)**

(74) Representative: **Santarelli
Tour Trinity
1 bis Place de la Défense
92400 Courbevoie (FR)**

(54) **OPTICAL ARTICLE INCORPORATING A FUNCTIONALIZED SUBSTRATE, FUNCTIONALIZING AND MANUFACTURING METHODS THEREOF**

(57)    The invention relates to an optical article comprising a surface-functionalized optical substrate and an optical element deposited on the same, an eyewear comprising this article, a method for functionalizing the substrate and a method of manufacturing this article.

The optical substrate (5) is based on a first thermoset polymer and has a first outer surface, and the optical element (10) is based on a second thermoset polymer selected from (meth)acrylate based resins, has a second inner surface and is deposited on the optical substrate (5), the second inner surface being bonded to the first outer surface by covalent bonds at an interface thereof.

According to the invention, the first outer surface is functionalized by functional groups comprising a product of a radical crosslinking reaction between the second thermoset polymer and a derivative of an organosilane compound which contains a vinyl or (meth)acrylate end group, and the derivative of the organosilane compound is a basic hydrolyzate thereof, the basic hydrolysate being grafted on the first outer surface to at least partially form said interface.

FIG. 4

EP 4 763 494 A1

(52) Cooperative Patent Classification (CPC): (Cont.)

C-Sets
**G02B 1/041, C08L 33/10;**
**G02B 1/041, C08L 75/04, C08L 81/00**

**Description**

## FIELD OF THE INVENTION

The present invention relates to an optical article comprising a surface-functionalized optical thermoset substrate and an optical thermoset element deposited on the same, an eyewear comprising this optical article, a method for functionalizing the optical substrate and a method of manufacturing this optical article. The invention particularly applies for implementing an additive manufacturing step, particularly an inkjet printing step or a coating process on the surface-functionalized optical substrate, to obtain said optical article which may for example be an ophthalmic lens for an eyewear.

## DESCRIPTION OF RELATED ART

Recently, the development of optical thermoset materials for build-over applications by additive manufacturing, such as by inkjet printing (also known as 3D-printing), has become a big challenge due to the known poor adhesion between the printed thermoset optical element and a thermoset substrate made of a different material.

In this respect, a so-called "build-over technology" can be useful to reduce time of manufacturing of optical lenses, as manufacturing a complete optical lens layer by layer by additive manufacturing may be time consuming, in view of mass production of articles.

Such a build-over technology is disclosed for instance in international applications WO2015/004383 A1, WO2020/115061 A1 and WO 2024/126334 A1, wherein at least one complementary optical member is adjoined by additively manufacturing to a starting optical member.

WO 2024/126334 A1 relates to a method for additively manufacturing an ophthalmic device comprising providing a starting optical member and inkjet printing a complementary optical member on the starting optical member thanks to at least one inkjet print head having a plurality of nozzles configured to deposit a volume of a predetermined material, wherein inkjet printing comprises tilting the at least one inkjet print head relative to the starting optical member and/or rotating the starting optical member during inkjet printing.

One major issue in additive manufacturing processes for build-over applications resides in that early delamination of the printed optical element is observed in the absence of surface treatment of the substrate, typically when depositing on a polythiourethane-based optical substrate a thermoset optical material based on a thermoset polymer of a different family.

In particular, even though silane coupling agents are known to enhance adhesion on an organic substrate (see Arkles, B., Silane Coupling Agents, Gelest, Inc., 2006 at https://www.gelest.com/wp-content/uploads/Silane Coupling Agents.pdf), no satisfactory solution has been proposed heretofore according to the inventors' knowledge, to modify the surface of a polythiourethane-based substrate to improve adhesion of a subsequently deposited thermoset optical element based on a (meth)acrylate resin.

## SUMMARY OF THE INVENTION

An object of the invention is to overcome at least the above-mentioned drawback, by providing an optical article comprising:

- an optical substrate based on a first thermoset polymer and having a first outer surface, and
- an optical element deposited on the optical substrate and based on a second thermoset polymer selected from (meth) acrylate-based resins and having a second inner surface,

which allows to avoid an early delamination of the optical element by modifying the first outer surface of the substrate, so as to form strong and durable covalent bonds between the optical element and optical substrate.

This aim is achieved in that the inventors have just discovered that if a specific functionalization of the first outer surface is implemented, essentially comprising grafting thereon a basic hydrolysate of an organosilane compound which contains a vinyl or (meth)acrylate end group, then it is possible to obtain such strong and durable covalent bonds between the second inner surface and the first outer surface which may be advantageously deposited in a subsequent additive manufacturing step.

According to the invention, the optical article comprises said optical substrate and said optical element, the second inner surface of which being bonded to the first outer surface of the substrate by covalent bonds at an interface thereof,

wherein the first outer surface is functionalized by functional groups comprising a product of a radical crosslinking reaction between the second thermoset polymer and a derivative of an organosilane compound which contains a vinyl or (meth)acrylate end group at a chain end thereof, and
wherein the derivative of the organosilane compound is a basic hydrolyzate thereof, the basic hydrolysate being grafted on the first outer surface to at least partially form said interface.

As will be explained below, the grafting of said basic hydrolyzate of the organosilane compound onto the first outer surface (which basic hydrolyzate is obtained by hydrolyzing this compound under basic conditions, i.e. at a pH higher than 7), to obtain a silanized optical substrate, may be:

- preceded by a prior step of initially modifying the first outer surface, only in case the organosilane compound contains a (meth)acrylate end group, by activating the first outer surface with a plasma or corona treatment, and
- optionally followed by a step of further modifying the first outer surface by a thiol-ene reaction to graft a thiol compound onto the vinyl or (meth)acrylate end group.

It will be noted that the adhesion (particularly in terms of resistance to delamination) of the thermoset optical element to the thermoset substrate modified according to the invention, as evaluated by the cross-hatch method according to ISO 2409 standard and by bending flexural test as described below, was thus significantly improved compared to the adhesion of the same thermoset optical element to the same untreated thermoset optical substrate (i.e. having its first outer surface not modified).

Advantageously, the optical element according to the invention may have a maximum thickness of between 10 $\mu$m and 2 mm, and may resist delamination according to said cross-hatch test and said bending flexural test.

According to an embodiment of the invention, said functional groups further comprise a product of a thiol-ene reaction between a thiol compound included at said interface and the vinyl or (meth)acrylate end group, the thiol compound being grafted onto the end group, and said functional groups comprise a product of a radical crosslinking reaction between the second thermoset polymer and the product of said thiol-ene reaction.

In this embodiment, the thiol compound may be selected from nonaromatic functionalized monothiols and polythiols, for example pentaerythritol tetrakis(3-mercaptopropionate), trimethylolpropane tris(3-mercaptopropionate), poly(ethylene glycol) dithiol or ethylene glycol bis(3-mercaptopropionate).

It may be noted that said thiol compound and the related thiol-ene reaction contributes to enhance the adhesion and the wettability of the second thermoset polymer.

According to a first example of the invention which may optionally conform to this embodiment requiring said thiol-ene reaction, the organosilane compound contains a vinyl end group and may be selected from aliphatic organoalkoxysilanes, such as vinyltrimethoxysilane or vinyltriethoxysilane.

It will be noted that said thiol-ene reaction implemented on the vinyl end group provides very advantageous results, in terms of strong and durable covalent bonds between the optical element and optical substrate, as visible in the below exemplary experiments.

According to a second example of the invention which may optionally conform to this embodiment requiring said thiol-ene reaction, the organosilane compound contains a (meth)acrylate end group, and said functional groups preferably comprise the product of:

- a plasma or corona initial activation of said first outer surface (e.g. an activation by an atmospheric plasma of oxygen, argon or nitrogen, such as an oxygen plasma), and of
- a subsequent radical crosslinking reaction between the second thermoset polymer and the basic hydrolysate of the organosilane compound which contains a (meth)acrylate end group and may be selected from aliphatic organoalkoxysilanes, such as 3-(trimethoxysilyl)propyl methacrylate, 3-(triethoxysilyl)propyl methacrylate or 3-(trimethoxysilyl) propyl acrylate.

It will be noted that said thiol-ene reaction implemented on the (meth)acrylate end group appears to be optional, to provide strong and durable covalent bonds between the optical element and optical substrate, as also visible in the below exemplary experiments.

According to another feature of the invention common to said first embodiment and said second embodiment defined above, said first thermoset polymer may advantageously be a polythiourethane, preferably a polythiourethane copolymer (e.g. a copolymer of urethane and thiourethane), such as so-called "MR-7", "MR-8", or "MR-1.74" lens substrates (for example a polythiourethane-based substrate for an ophthalmic lens having a refractive index of from 1.54 to 1.74), even though other thermoset polymers may be used for the optical substrate.

According a general feature of the invention, the optical article may advantageously be an ophthalmic lens for an eyewear, or forming a contact lens.

An ophthalmic lens according to the invention may comprise one or more functional optical elements and/or a multilayer optical element, which surmount(s) the first outer surface of the substrate and include(s) said thermoset optical element as defined above. These functional optical elements, which are conventionally used in optics, may be, non-limitingly, an anti-shock primer layer, an anti-abrasion or anti-scratch coating.

Another object of the invention is to provide an eyewear comprising an optical article as defined above, which may include lenses, all ophthalmic devices such as ophthalmic lenses, spectacle glasses, reading glasses, sunglasses, goggles, sport goggles, diving masks, smart eyewear or augmented reality smart glasses, virtual reality headsets, wearable tech glasses, contact lenses such as corrective contact lenses, cosmetic contact lenses, preferably being spectacle glasses (i.e. comprising two ophthalmic lenses fitted on a frame, possibly satisfying a prescription for power correction and/or astigmatism, e.g. a prescription lens having for instance a convex front surface and a concave rear surface).

According to another aspect of the invention, a method for functionalizing a first outer surface of an optical substrate is provided in order to implement a subsequent deposition of an optical element, the optical substrate being based on a first thermoset polymer, wherein the functionalizing method comprises

> a) grafting on the first outer surface a derivative of an organosilane compound which contains a vinyl or (meth)acrylate end group at a chain end thereof, to obtain a silanized optical substrate, with a prior step of plasma or corona activating the first outer surface only when the organosilane compound contains a (meth)acrylate end group, and optionally
> b) modifying the vinyl or (meth)acrylate end group by a thiol-ene reaction to graft a thiol compound onto the end group, to obtain a functionalized first outer surface by implementing at least step a), the functionalized first outer surface being capable of forming covalent bonds with an optical element based on a second thermoset polymer selected from (meth) acrylate based resins, and wherein the derivative of the organosilane compound is a basic hydrolysate thereof.

As explained above, the prior activation step a0), which is preferably required in case the organosilane compound contains a (meth)acrylate end group, may comprise an activation:

- by an atmospheric plasma of a gas preferably selected from oxygen, argon and nitrogen (e.g. an oxygen plasma), and/or
- by a corona treatment (i.e. by creating an electric discharge with high voltage and high frequency, caused by ionization of a fluid such as air).

As also explained above, in the functionalizing method of the invention:

- when the organosilane compound contains a vinyl end group (according to said first example), said organosilane compound may be selected from aliphatic organoalkoxysilanes, e.g. vinyltrimethoxysilane or vinyltriethoxysilane;
- when the organosilane compound alternatively contains a (meth)acrylate end group (according said second example), the organosilane compound may be selected from aliphatic organoalkoxysilanes, e.g. 3-(trimethoxysilyl)propyl methacrylate, 3-(triethoxysilyl)propyl methacrylate or 3-(trimethoxysilyl)propyl acrylate; and
- in said embodiment requiring the thiol-ene reaction, the thiol compound used for grafting onto the vinyl or (meth) acrylate end group may be selected from nonaromatic functionalized monothiols and polythiols, e.g. pentaerythritol tetrakis(3-mercaptopropionate), trimethylolpropane tris(3-mercaptopropionate), poly(ethylene glycol) dithiol or ethylene glycol bis(3-mercaptopropionate).

Still in the functionalizing method of the invention:

- step a) may comprise:

  a1) preparing from the organosilane compound a solution of a hydrolyzed organosilane compound in basic conditions,
  a2) immersing the optical substrate into the solution or evaporating under vacuum the solution in an evaporation chamber containing the optical substrate, to obtain the silanized optical substrate, and
  a3) heating the silanized optical substrate in an oven;

  and/or
- optional step b) may comprise:

  b1) preparing a solution of the thiol compound comprising a radical initiator and optionally a solvent, and
  b2) subjecting the vinyl or (meth)acrylate end group to the thiol-ene reaction, by immersing the silanized optical substrate into said solution of the thiol compound, and irradiating the immersed silanized optical substrate for example by UV light.

According to another aspect of the invention, there is also provided a method of manufacturing an optical article comprising an optical substrate based on a first thermoset polymer and having a first outer surface, and an optical element based on a second thermoset polymer selected from acrylate based resins and methacrylate based resins, the optical element having a second inner surface and being deposited on the optical substrate, the second inner surface being bonded to the first outer surface by covalent bonds at an interface thereof,
wherein the optical element is deposited on the optical substrate by implementing the following steps:

A) depositing the optical element in a crosslinkable state onto the functionalized first outer surface of the optical substrate, which is functionalized according to the above-described functionalizing method of the invention, and
B) crosslinking the deposited crosslinkable optical element by irradiation, for example by UV light.

In the manufacturing method of the invention, step A) may comprise depositing one or several layers onto the first outer layer of the optical substrate by additive manufacturing, in particular by inkjet printing (i.e. 3D-printing) by depositing droplets of the optical element in the crosslinkable state side by side and/or one above the others or by a coating process such as spin coating.

The expression "additive manufacturing" is understood to mean, according to standard ASTM 2792-12, manufacturing techniques implementing a process involving fusing materials in order to manufacture objects from 3D modeling data, usually representing a layer-by-layer design, as opposed to subtractive manufacturing methodologies, such as traditional machining.

The additive manufacturing here corresponds, for example, to a three-dimensional (3D) printing process involving, for example, inkjet printing of the thermosetting (i.e. crosslinkable) optical element, or a stereolithography process, or even a mask projection stereolithography process.

As widely known, additive manufacturing technologies consist in manufacturing objects by juxtaposing predetermined elementary volume elements (e.g. droplets in the present invention) in accordance with a predetermined arrangement contained in digital form in a computer-assisted design (CAD) file. The elementary volume elements or droplets may be created and juxtaposed using a variety of different technical principles, for example by providing droplets of photopolymerizable monomers by means of a print head, by selectively photopolymerizing with a source of UV light near the surface of a bath of monomer (stereolithography technique).

A specific method of additive manufacturing, which may advantageously be implemented in the present invention, may comprise successively depositing droplets of liquid material by 3D-printing, or inkjet printing, and curing them forming layers of material, wherein the shape of the layers is controlled by controlling the position and volume of the deposited droplets, whereas the curing step is usually global.

Nonetheless, other processes may alternatively be used to implement the above step A) of the manufacturing method.

In the present description, the terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about." Also unless otherwise indicated, the indication of an interval of values « from X to Y » or "between X to Y", according to the present invention, means as including the values of X and Y.

## DESCRIPTION OF DRAWINGS

Figure 1 is a schematic view of a manufacturing system configured to carry out a method for additively manufacturing optical articles according to the invention;
Figure 2 is a schematic block diagram showing the main reaction steps of a manufacturing method of the invention, according to the first example of said embodiment requiring a thiol-ene reaction onto a vinyl end group of the organosilane compound;
Figure 3 is a schematic diagram showing the chemical reaction steps involved in the thiol-ene reaction of figure 2,
Figure 4 is a schematic block diagram showing, by means of chemical formulae including the formula of the thiol compound at the left side, the main reaction steps of the manufacturing method of figure 2, according to the first example of said embodiment;

Figure 5 shows two pairs of photographs, including a left pair of photographs showing a poor adhesion of the optical element to the "witness" untreated optical substrate, and a right pair of photographs showing a satisfactory adhesion of the same optical element to the functionalized optical substrate according to figures 2-4 of the invention, both pairs of photographs showing the results of a cross-hatch test;

Figure 6 shows two photographs, including a left photograph showing a partial delamination of the optical element for said "witness" untreated optical substrate, and a right photograph showing no delamination of the optical element from the functionalized optical substrate obtained according to figures 2-4, both photographs showing the results of a bending flexural test;

Figure 7 includes two schematic sectional views illustrating the principle of the bending flexural test implemented to quantify the maximum force before detachment or breakage of specimens made of the "witness" optical article with the untreated substrate and of the optical article obtained according to the first example of said embodiment;

Figure 8 is a schematic block diagram showing the main reaction steps of a manufacturing method of the invention, according to said second example not implementing a thiol-ene reaction onto a methacrylate end group of the organosilane compound; and

Figure 9 is a schematic block diagram, showing by means of chemical formulae including that of the methacrylate end group of the organosilane compound, the main reaction steps of the manufacturing method of figure 8.

## EXAMPLE OF A MANUFACTURING METHOD OF THE INVENTION:

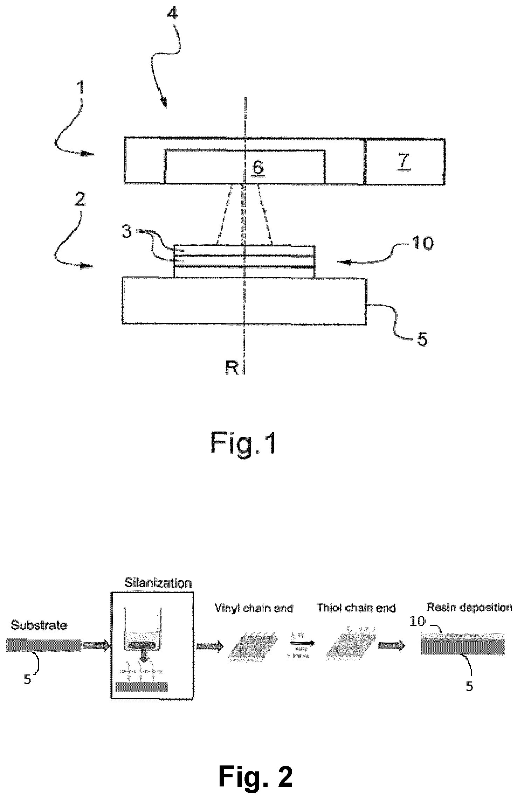

As visible in figure 1 which diagrammatically shows an exemplary system for additively manufacturing optical articles in the particular case of a build-over application to which may apply the invention, the additive system 1 configured for manufacturing the optical articles 2 (e.g. ophthalmic lenses) drop by drop and then layer by layer, each layer 3 being formed by a volume of the predetermined material polymerized and hardened.

In this respect, the manufacturing system 1 comprises an additive unit also called additive manufacturing module, here formed by an inkjet printer 4 configured for depositing a volume of a predetermined material in the shape of droplets, e.g. in the present invention the optical element in a crosslinkable state.

The inkjet printer 4 comprises one or a plurality of inkjet print heads 6 having each a plurality of nozzles from which the predetermined material is deposited in droplets. A droplet is here considered as being a volume of material devoid of tail or satellite. Each print head 6 has a predetermined number of nozzle(s) and a predetermined arrangement thereof. The nozzles can be activated or deactivated.

The inkjet printer 4 may further comprise a command and control unit 7 including system elements configured to run a computer program including instructions configured to implement at least some steps of the additive manufacturing method according to the disclosure for manufacturing the optical article 2. The unit 7 may be configured to command and control the print head(s) 6 and in particular, a print head resolution corresponding to a radial resolution of the print head(s) 6 which is defined at least as a function of the number and the arrangement of the nozzles. The unit 7 may be configured to command and control activation and/or deactivation of each nozzle and also each nozzle firing frequency if any.

The nozzle firing frequency can be variable or fixed. The nozzle firing frequency may depend at least on geometrical characteristics of the starting optical member 5 and/or on geometrical characteristics of the complementary optical member and/or on the location of the starting optical member, including tilting and radial shifting relative to the rotation axis R of the starting optical member 5, of the print head(s).

The inkjet printer 4 is located on an upper side of a starting optical substrate 5 and is configured to build-over a complementary optical element 10, formed by the deposition of droplets of the optical element on the crosslinkable state, forming the layers 3 or at least one layer, on the optical substrate 5. In other words, the optical substrate 5 has an upper surface (here said first outer surface), such as a convex surface, above which is facing the print head(s) 6 and onto which is covalently bonded to the lower surface of the optical element 10 (here said second inner surface).

The command and control unit 7 may be configured to locate the print head(s) 6 at a distance value selected among a plurality of distance values from the optical substrate 5.

The distance value is comprised between a minimum height according to which the predetermined material is able to form droplets and a maximum height according to which the droplets predetermined material are deposited accurately on the optical substrate 5.

The optical substrate 5 may be able to rotate around the rotation axis R.

In addition, the unit 7 may be configured to command and control a print resolution of the print head(s) 6, which comprises a process resolution corresponding to an angular resolution which is defined at least as a function of the rotation speed of the optical substrate 5 and of nozzles firing frequency, and the print head resolution as defined above.

For instance, the optical article 2 which is obtained can be the combination of the complementary optical element 10 and the starting optical substrate 5, if the latter forms a standard blank itself.

In a variant, the optical substrate can be a part of the molding device, the complementary optical element is built over the part of the molding device and then the standard blank is molded, casted or injected directly in the molding device and on the complementary optical element.

In another variant, the starting optical substrate can be a part of the molding device, the complementary optical element is built over the part of the molding device and is formed to be able to be mounted directly in a pair of eyeglasses' frame.

## EXEMPLARY EXPERIMENTS ACCORDING TO THE INVENTION:

The following examples illustrate said first example and said second example of the present invention for manufacturing optical articles in a detailed, but non-limiting manner.

Cross hatch and flexural tests were used to evaluate and quantify the adhesion of the second inner surface of the thermoset optical element to the first outer surface of the optical substrate, for specimens made of the "witness" optical article incorporating the untreated substrate (i.e. not functionalized first outer surface) and of optical articles of the invention each incorporating the functionalized first outer surface, respectively.

The starting optical substrate was based on a polythiourethane of tradename "MR-8", and the optical element deposited thereon (with or without functionalization of said first outer surface) being a UV-curable methacrylate resin.

The functionalization of the first outer surface was proved by EDX analysis and MSA measurements, as detailed below.

Energy Dispersive X-ray spectroscopy (EDX) was implemented to characterize the first outer surface of the substrate after functionalization. The EDX analysis was carried out using a Hitachi S-3400N device, to identify and quantify the chemical elements present on the functionalized surface. A beam of electrons was directed onto the first outer surface of the thermoset substrate once functionalized, exciting the atoms and causing the emission of characteristic X-rays.

A Mobile Surface Analyzer (MSA) was used to measure contact angles by a Krüss MSA mobile surface analyzer (Hamburg, Germany). Two liquids were used: demineralized water and diiodomethane. The droplet size was set to 1 $\mu$L, and contact angles were measured 5 seconds after application. An integrated camera allowed the drop shape on the surface to be displayed on the computer screen connected to the MSA. The surface energy was calculated by the instrument with the Owens-Wendt-Rabel-Kaelble formula, which proved that the total surface energy of a solid, s, can be expressed as the sum of the contributions of the dispersion force $\gamma_s^d$ and polar $\gamma_s^p$ components. These can be determined from contact angle data ($\theta$) of polar and non-polar liquids, whose dispersion $\gamma_{li}^d$ and polar $\gamma_{li}^p$ parts of the surface energy are known, using the following equation:

$$(1 + \cos\theta_i)\,\gamma_{li} = 2\left(\sqrt{\gamma_s^d \gamma_{li}^d} + \sqrt{\gamma_s^p \gamma_{li}^p}\right)$$

.

The cross-hatch test was carried out according to ISO 2409 standard, with 10 $\mu$m of resin for the deposited optical element 10. Poor adhesion results were identified below by "bad" (score of 5/5 showing traces of peeling or removal on the incised cross), intermediate adhesion results by "intermediate" (score of 2-3/5) and good adhesion results by "good" (score of 0/5 with no visible traces of peeling or removal on the incised cross).

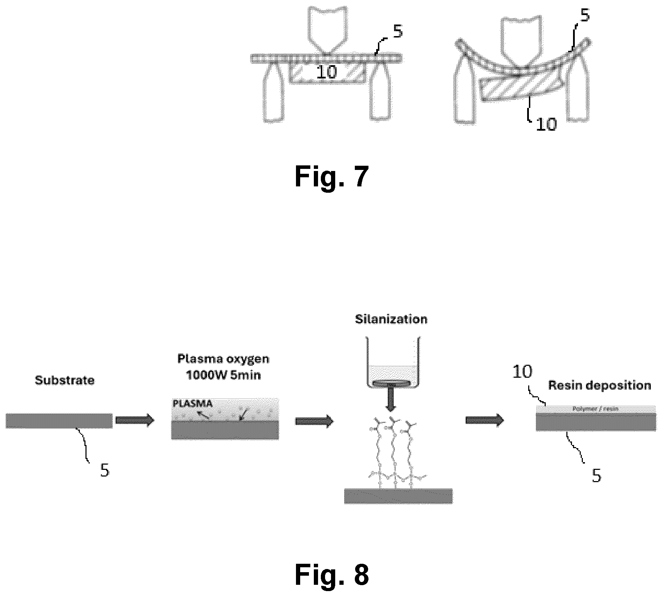

The bending flexural test was performed using a Instron 6800 series machine, equipped with a 2000 N load cell and controlled by the "Bluehill" software. Circular specimens (thermoset substrate 5) with a diameter of 54.7 mm were used. A 40 mm diameter and 100$\mu$m thinkness resin was deposited on the specimen. The specimen was positioned, so that the resin 10 was under the side opposite to the application of force. As visible in figure 7, the clamp applied force to the specimen (see left sectional view of figure 7), until the resin 10 detached or the thermoset substrate 5 broke (see right sectional view of figure 7). At the end of the test, a force-displacement curve was obtained. The maximum force value before the drop indicated the maximum force before detachment or breakage.

## 1) First example of functionalization with an organosilane compound having a vinyl end group and further with a thiol compound (thiol-ene reaction):

### a) Functionalization of the substrate with vinyltrimethoxysilane (VTMS):

As visible in figure 2, a solution of hydrolyzed VTMS was prepared to functionalize the first outer surface of the substrate 5 with this organosilane compound having a vinyl end group at its chain end and, as visible in tables 2 and 2a below, several parameters were modified to maximize the hydrolysis of VTMS without condensation, such as concentration of VTMS, pH (under basic and acid conditions), duration of the hydrolysis reaction and immersion duration in the bath. Other parameters were optimized to enable the grafting of the VTMS onto the surface of the substrate 5, such as surface

activation by plasma and heating after silanization. As visible from these tables 2-2a, the best results were obtained using 1% vol. of VTMS and 10 μL of KOH (1M) in deionized water, which denoted basic conditions for the hydrolysis, and the substrate was immersed in the solution at room temperature during 1h. Then, the substrate was washed with deionized water and placed in an oven at 110°C for 1 hour.

Tables 1-1a below show that the functionalization of the first outer surface of the substrate was proved by MSA measurement and EDX analysis, as a decrease of the surface energy of the first outer surface was observed from 48 mN/m (before silanization) to 30 mN/m (after silanization), and as a small amount of silicon (0.3%) was detected by EDX, confirming the grafting of the organosilane compound onto the first outer surface, since no silicon was found in the "MR-8" substrate before its silanization.

Table 1:

| Element | Atomic % |
|---------|----------|
| C | 76.0 |
| O | 13.6 |
| Si | 0.3 |
| S | 10.2 |

Table 1a:

| | Surface energies (mN/m) |
|---|---|
| Before silanization | 48.3 ± 2.0 |
| After silanization | 30.9 ± 0.5 |

**b) Thiol-ene reaction by reaction of the vinyl end group with a thiol compound:**

As also visible in figure 2, the thiol-ene reaction consisted of the addition of a polythiol compound on the alkenyl vinyl end group by using a radical initiator.

As the surface tension of the resin was close to 26 mN/m and the surface energy of the substrate was 31 mN/m after functionalization, a dewetting of the resin on the substrate could be observed due to a poor energy gap. So, to guarantee a good adhesion without dewetting, a tetrafunctionalized thiol was used, pentaerythritol tetra(3-mercaptopropionate), known as PETMP.

A solution containing 20 g of PETMP with 0.2 g of acetone and 0.3 g of BAPO (radical initiator) were mixed until dissolution of BAPO. The substrate was immersed in the solution and it was irradiated under UV light for 60 s to allow the click reaction between the thiol -SH and the vinyl -C=C. The substrate was then washed in an acetone solvent. The surface functionalization was proved by MSA (Mobile Surface Analyzer), and the surface energy increased to 56 mN/m. The transmission of the final substrate was greater than 90%.

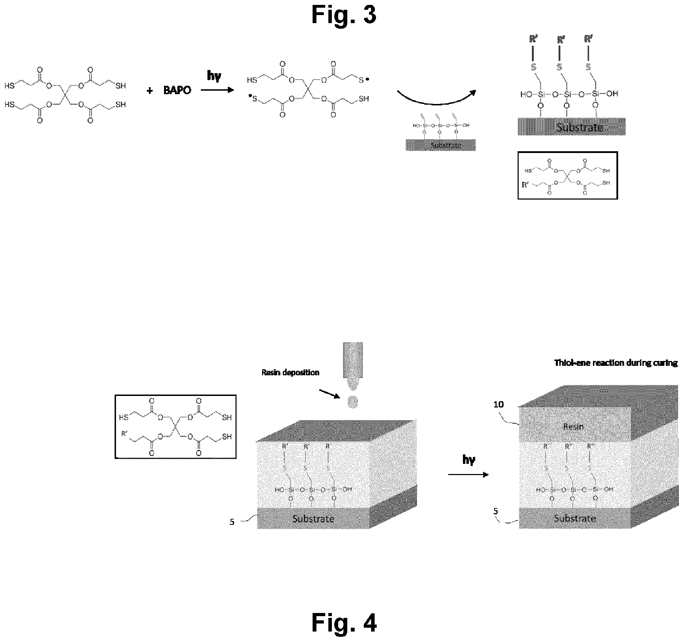

Figure 3 illustrates this thiol-ene reaction of PETMP with said vinyl end group.

c) Resin deposition for the optical element and UV curing thereof:

As visible in figure 4, the methacrylate-based resin was deposited by inkjet printing droplets (see left part of figure 4) on the first outer surface of the optical substrate, once functionalized by implementation of the above steps a) and b).

The uncured methacrylate-based resin was subsequently photopolymerized by UV light (by energy E=hv, see right part of figure 4) to covalently attach this resin to the substrate by thiol-ene click reaction. Then, a post-curing was realized under nitrogen to reach a conversion rate greater than 90%. The thickness of the resin 10 was between about 10 μm and 100 μm.

**d) Adhesion Evaluation of the manufactured optical articles:**

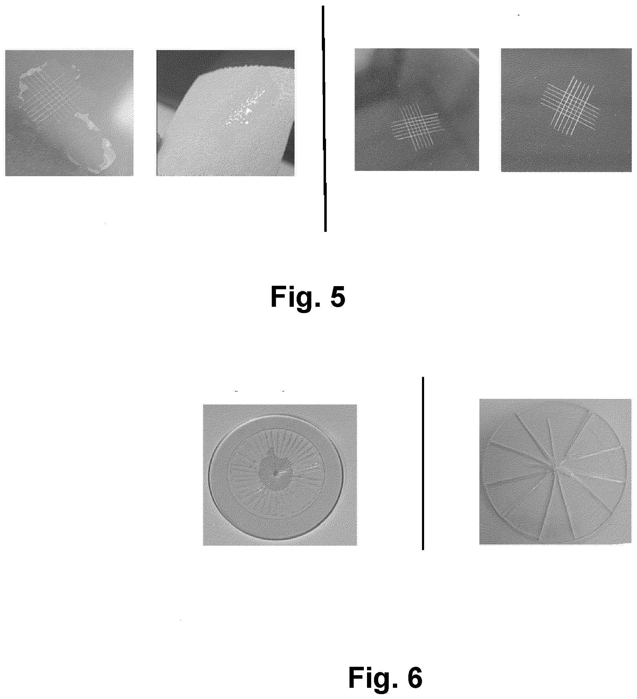

The adhesion of each "witness" and of each invention-related optical article was evaluated by the above-described cross-hatch test (ISO 2409), as visible in figure 5, and the bending flexural test as visible in figure 6.

Figure 5 shows in its left pair of photographs that the "witness" specimen article exhibited a poor adhesion between the optical element 10 (resin) and the optical substrate 5 (untreated), because of the visible traces of peeling or removal which masked part of the cross-incisions on the right photograph of this left "witness" pair (score of 5/5), contrary to the good adhesion (score of 0/5 with no visible traces of peeling or removal masking the cross-incisions) observed on the right photograph of the right pair for the optical article obtained by the above steps a) to c).

Figure 6 shows in its left photograph that a resin detachment was measured (see the visible detachment area at a central zone of the circular "witness" specimen) on the untreated substrate at a strength of $622 \pm 4$ N (with a displacement of $5.8 \pm 0.2$ mm) after resin deposition and curing, for the "witness" specimen of the optical article, and that, in its right photograph, for the specimen of the optical article obtained by the above steps a) to c), the specimen was broken at a strength of $580 \pm 10$ N (with a displacement of $5.5 \pm 0.2$ mm) without any resin detachment (see the absence of detachment area on the circular specimen of the invention).

The below tables 2-2a show the adhesion results obtained according to the cross-hatch test, depending on the physical-chemical conditions implemented for the above step a) of silanization of the first outer surface of the substrate 5.

Table 2:

| Silanization basic conditions | | | | | |
|---|---|---|---|---|---|
| Oxygen plasma before silanization | VTMS (vol.) | KOH (1 M) | Immersion time | heating | Cross-hatch results |
| 500 W 20 min | 1% | 100 μL | 1h30 | 1h at 110°C | bad |
| 500 W 20 min | 1% | 200 μL | 1h30 | - | bad |
| 2000 W 10 min | 1% | 100 μL | 1h30 | - | bad |
| 2000 W 10 min | 1% | 100 μL | 24 h | - | bad |
| 2000 W 10 min | 1% | 100 μL | 1h30 | - | bad |
| / | 1% | 100 μL | 1h30 | - | bad |
| 500 W 20 min | 2% | 100 μL | 1h30 | - | bad |
| 500 W 20 min | 3% | 100 μL | 1h30 | - | bad |
| 500 W 20 min | 4% | 100 μL | 1h30 | - | bad |
| 500 W 20 min | 6% | 100 μL | 1h30 | - | intermediate |
| 500 W 20 min | 16% | 100 μL | 5 min / 15 min | - | bad |
| 500 W 20 min | 10% | 100 μL | 1h30 | - | bad |
| / | 1% | 10 μL | 1h | 1hat110°C | good |
| / | 1% | 10 μL | 1h | - | bad |
| / | 1% | 10 μL | 1h30 | 1h at 110°C | bad |

Table 2a:

| Silanization acid conditions | | | | | | |
|---|---|---|---|---|---|---|
| Oxygen plasma before silanization | VTMS | Acid (C) | pH | Immersion time | heating | Cross-hatch results |
| 500 W 20 min | 2% | Acetic acid (99.8%) | 5 | 30 min | 1h at 110°C | bad |
| 500 W 20 min | 2% | Acetic acid (99.8%) | 5 | 30 min | - | bad |
| 2000 W 20 min | 2% | Acetic acid (99.8%) | 5 | 30 min | - | bad |
| / | 2% | HCl (0.1 M) | 5 | 1h30 | - | bad |
| 2000 W 10 min | 2% | HCl (0.1 M) | 5 | 1h30 | - | bad |
| 2000 W 10 min | 2% | HCl (0.1 M) | 5 | 24 h | - | bad |

As a conclusion from tables 2-2a, a basic hydrolyzate of the organosilane compound was required and allowed to obtain good adhesion results.

## 2) Second example of functionalization with an organosilane compound having a methacrylate end group and without a thiol compound:

This experiment according to the invention was realized in three steps, as visible in figure 8.

Firstly, the optical substrate 5 was treated in an **initial activation step a)** by plasma (oxygen) at a power of 1000 W during 5 minutes.

Then, an organosilane having a methacrylate chain end was grafted on the substrate in **silanization step b),** thanks to a hydrolysis reaction following the protocol presented in tables 3-3a below.

The surface functionalization was realized with 3-(trimethoxysilyl)propyl methacrylate (TMSPMA), and several condition reactions were tested, such as plasma treatment, hydrolysis conditions and heating, as presented in the tables 3-3a below.

Finally, in **step c),** after a resin deposition in the form of droplets was implemented on each thus functionalized substrate, the specimen were cured under UV light, thus allowing a crosslinking reaction by radical polymerization between the grafted methacrylates on each optical substrate 5 and the methacrylate-based resin of the optical element 10. The adhesion in each specimen was evaluated through said cross-hatch test.

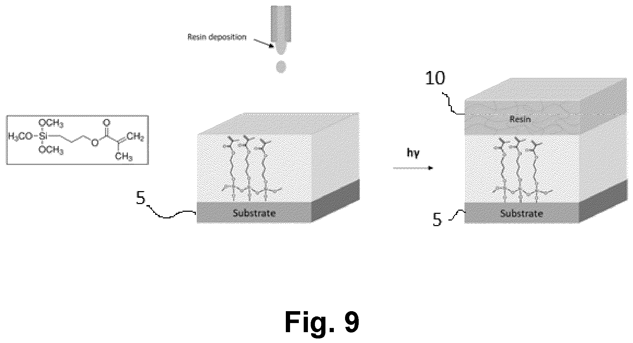

As visible in figure 9, after deposition of the UV curable resin by inkjet printing on the functionalized substrate according to the invention, a photopolymerization reaction occured, and the covalent linkage was then realized between the substrate and the resin thanks to the methacrylates present in the UV curable solution and on the substrate.

**Adhesion evaluation for the manufactured optical articles:**

A good adhesion of the resin on the functionalized substrate of the invention was observed, when the silanization reaction was done on a substrate activated by a plasma treatment using a hydrolysis bath containing 50 mL of water, 300 $\mu$L of TMSPMA and 10 $\mu$L of KOH. The immersion time of the substrate was fixed at 1h, and then it was heated at 110°C for 1h.

Cross-hatch tests on 10 $\mu$m of resin were realized after crosslinking of the resin on the substrate (with and without functionalization).

The below tables 3-3a show the adhesion results obtained according to the cross-hatch test, depending on the physical-chemical conditions implemented for the above step b) of silanization of the first outer surface of the substrate 5.

Table 3:

| Silanization basic conditions | | | | | | |
|---|---|---|---|---|---|---|
| Plasma before silanization | Water volume | TMSPMA | KOH (1M) | Immersion time | heating | Cross-hatch results |
| / | 30 mL | 300 $\mu$L | 10 $\mu$L | 1h | 1h at 110°C | bad |
| / | 30 mL | 300 $\mu$L | 10 $\mu$L | 48 h | 1h at 110°C | intermediate |
| / | 50 mL | 300 $\mu$L | 10 $\mu$L | 1h | 1h at 110°C | intermediate |
| / | 50 mL | 300 $\mu$L | 10 $\mu$L | 48 h | 1h at 110°C | intermediate |
| / | 100 mL | 300 $\mu$L | 10 $\mu$L | 1h | 1h at 110°C | bad |
| / | 50 mL | 300 $\mu$L | 10 $\mu$L | 30 min | 1h at 110°C | bad |
| / | 50 mL | 300 $\mu$L | 100 $\mu$L | 1h | 1h at 110°C | bad |
| / | 50 mL | 600 $\mu$L | 100 $\mu$L | 1h | 1h at 110°C | bad |
| / | 50 mL | 600 $\mu$L | 50 $\mu$L | 1h | 1h at 110°C | bad |
| / | 50 mL | 400 $\mu$L | 10 $\mu$L | 1h | 1h at 110°C | bad |
| / | 50 mL | 400 $\mu$L | 100 $\mu$L | 1h | 1h at 110°C | bad |
| / | 50 mL | 400 $\mu$L | 0 $\mu$L | 1h | 1h at 110°C | bad |
| 1000 W 5 min | 30 mL | 300 $\mu$L | 10 $\mu$L | 1h | 1h at 110°C | bad |
| 1000 W 5 min | 50 mL | 300 $\mu$L | 10 $\mu$L | 1h | 1h at 110°C | good |

Table 3a:

| Silanization acid conditions | | | | | | |
|---|---|---|---|---|---|---|
| Plasma before silanization | Water volume | TMSPMA | Acid (C) | Immersion time | heating | Cross-hatch results |
| 500 W 20 min | 30 mL | 300 μL | Acetic acid (99.8%) | 1 h or 24h | - | bad |
| 500 W 20 min | 30 mL | 600 μL | Acetic acid (99.8%) | 1h | - | bad |
| 500 W 20 min | 30 mL | 1.2 mL | Acetic acid (99.8%) | 1h | - | bad |
| / | 30 mL | 1 mL | Acetic acid (99.8%) | 1h | 1h at 110°C | bad |
| / | 30 mL | 1 mL | HCl (0.1 M) | 1h | - | bad |
| / | 30 mL | 1 mL | HCl (0.1 M) | 1h | 1h at 110°C | bad |

As a conclusion from tables 3-3a, a basic hydrolyzate of the organosilane compound was again required and allowed to obtain good adhesion results.

**Claims**

1. Optical article (2) comprising:

   - an optical substrate (5) based on a first thermoset polymer and having a first outer surface, and
   - an optical element (10) based on a second thermoset polymer selected from acrylate based resins and methacrylate based resins, the optical element (10) having a second inner surface, the optical element (10) being deposited on the optical substrate (5), the second inner surface being bonded to the first outer surface by covalent bonds at an interface thereof,
   wherein the first outer surface is functionalized by functional groups comprising a product of a radical crosslinking reaction between the second thermoset polymer and a derivative of an organosilane compound which contains a vinyl or (meth)acrylate end group at a chain end thereof, and
   wherein the derivative of the organosilane compound is a basic hydrolyzate thereof, the basic hydrolysate being grafted on the first outer surface to at least partially form said interface.

2. Optical article (2) as claimed in claim 1, wherein said functional groups further comprise a product of a thiol-ene reaction between a thiol compound included at said interface and the vinyl or (meth)acrylate end group, the thiol compound being grafted onto the end group, and wherein said functional groups comprise a product of a radical crosslinking reaction between the second thermoset polymer and the product of said thiol-ene reaction.

3. Optical article (2) as claimed in claim 2, wherein the thiol compound is selected from nonaromatic functionalized monothiols and polythiols, for example pentaerythritol tetrakis(3-mercaptopropionate), trimethylolpropane tris(3-mercaptopropionate), poly(ethylene glycol) dithiol or ethylene glycol bis(3-mercaptopropionate).

4. Optical article (2) as claimed in any of claims 1-3, wherein the organosilane compound contains a vinyl end group and is selected from aliphatic organoalkoxysilanes, for example vinyltrimethoxysilane or vinyltriethoxysilane.

5. Optical article (2) as claimed in any of claims 1-3, wherein the organosilane compound contains a (meth)acrylate end group, and wherein said functional groups comprise the product of:

   - a plasma or corona initial activation of said first outer surface, and of
   - a subsequent radical crosslinking reaction between the second thermoset polymer and the basic hydrolysate of the organosilane compound.

6. Optical article (2) as claimed in claim 5, wherein the organosilane compound containing a (meth)acrylate end group is selected from aliphatic organoalkoxysilanes, for example 3-(trimethoxysilyl)propyl methacrylate, 3-(triethoxysilyl) propyl methacrylate or 3-(trimethoxysilyl)propyl acrylate.

7. Optical article (2) as claimed in any of preceding claims, wherein said first thermoset polymer is a polythiourethane.

8. Optical article (2) as claimed in any of preceding claims, wherein the optical element (10) has a maximum thickness of between 10 $\mu$m and 2 mm.

9. Optical article (2) as claimed in any of preceding claims, wherein the optical article (2) is an ophthalmic lens.

10. Eyewear comprising an optical article (2) comprising:

   - an optical substrate (5) based on a first thermoset polymer and having a first outer surface, and
   - an optical element (10) based on a second thermoset polymer selected from acrylate based resins and methacrylate based resins, the optical element (10) having a second inner surface, the optical element (10) being deposited on the optical substrate (5), the second inner surface being bonded to the first outer surface by covalent bonds at an interface thereof,

   wherein the first outer surface is functionalized by functional groups comprising a product of a radical crosslinking reaction between the second thermoset polymer and a derivative of an organosilane compound which contains a vinyl or (meth)acrylate end group at a chain end thereof, and

   wherein the derivative of the organosilane compound is a basic hydrolyzate thereof, the basic hydrolysate being grafted on the first outer surface to at least partially form said interface.

11. Method for functionalizing a first outer surface of an optical substrate (5) in order to implement a subsequent deposition of an optical element (10), the optical substrate (5) being based on a first thermoset polymer, wherein the functionalizing method comprises

   a) grafting on the first outer surface a derivative of an organosilane compound which contains a vinyl or (meth) acrylate end group at a chain end thereof, to obtain a silanized optical substrate, with a prior step of plasma or corona activating the first outer surface only when the organosilane compound contains a (meth)acrylate end group, and optionally
   b) modifying the vinyl or (meth)acrylate end group by a thiol-ene reaction to graft a thiol compound onto the end group,

   to obtain a functionalized first outer surface by implementing at least step a), the functionalized first outer surface being capable of forming covalent bonds with an optical element (10) based on a second thermoset polymer selected from acrylate

   based resins and methacrylate based resins, and wherein the derivative of the organosilane compound is a basic hydrolysate thereof.

12. The functionalizing method as claimed in claim 11, wherein step a) comprises

   a1) preparing from the organosilane compound a solution of a hydrolyzed organosilane compound in basic conditions,
   a2) immersing the optical substrate (5) into the solution or evaporating under vacuum the solution in an evaporation chamber containing the optical substrate, to obtain the silanized optical substrate, and
   a3) heating the silanized optical substrate in an oven.

13. The functionalizing method as claimed in claim 11 or 12, wherein step b) comprises

   b1) preparing a solution of the thiol compound comprising a radical initiator and optionally a solvent, and
   b2) subjecting the vinyl or (meth)acrylate end group to the thiol-ene reaction, by immersing the silanized optical substrate into said solution of the thiol compound, and irradiating the immersed silanized optical substrate for example by UV light.

14. Method of manufacturing an optical article (2) comprising an optical substrate (5) based on a first thermoset polymer and having a first outer surface, and an optical element (10) based on a second thermoset polymer selected from acrylate based resins and methacrylate based resins, the optical element (10) having a second inner surface and being deposited on the optical substrate (5), the second inner surface being bonded to the first outer surface by covalent bonds at an interface thereof, wherein the optical element (10) is deposited on the optical substrate (5) by implementing the following steps:

A) depositing the optical element (10) in a crosslinkable state onto the functionalized first outer surface of the optical substrate (5), which is functionalized by:

a) grafting on the first outer surface a derivative of an organosilane compound which contains a vinyl or (meth) acrylate end group at a chain end thereof, to obtain a silanized optical substrate, with a prior step of plasma or corona activating the first outer surface only when the organosilane compound contains a (meth)acrylate end group, and optionally

b) modifying the vinyl or (meth)acrylate end group by a thiol-ene reaction to graft a thiol compound onto the end group, to obtain a functionalized first outer surface by implementing at least step a), the functionalized first outer surface being capable of forming covalent bonds with an optical element (10) based on a second thermoset polymer selected from acrylate based resins and methacrylate based resins,

and wherein the derivative of the organosilane compound is a basic hydrolysate thereof; and

B) crosslinking the deposited crosslinkable optical element (10) by irradiation, for example by UV light.

15. The manufacturing method as claimed in claim 14, wherein step A) comprises depositing one or several layers onto the first outer layer of the optical substrate (5) by additive manufacturing, inkjet printing or by a coating process such as spin coating, by depositing droplets of the optical element (10) in the crosslinkable state, side by side and/or one above the others.

Fig.1

Fig. 2

EP 4 763 494 A1

# Fig. 3

# Fig. 4

16

**Fig. 5**

**Fig. 6**

**Fig. 7**

**Fig. 8**

# Fig. 9

Europäisches
Patentamt

European
Patent Office

Office européen
des brevets

# EUROPEAN SEARCH REPORT

**Application Number**

EP 24 30 7267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/164458 A1 (BITEAU JOHN [US] ET AL) 28 June 2012 (2012-06-28) * abstract * * paragraphs [0029] - [0065], [0161] - [0165] * ----- | 1-15 | INV. B29D11/00 G02B1/04 G02B1/14 |
| A | EP 4 454 872 A1 (ESSILOR INT [FR]) 30 October 2024 (2024-10-30) * abstract * * figures 1-13 * ----- | 1-15 | |
| A | US 2022/348495 A1 (FEUILLADE MATHIEU [FR] ET AL) 3 November 2022 (2022-11-03) * abstract * * paragraphs [0080] - [0104] * ----- | 1-15 | |

**TECHNICAL FIELDS SEARCHED (IPC)**

B29D
G02B

The present search report has been drawn up for all claims

| Place of search | Date of completion of the search | Examiner |
|---|---|---|
| The Hague | 2 June 2025 | Heckmann, Paul |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 30 7267

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2025

| Patent document cited in search report | | Publication date | Patent family member(s) | | Publication date |
|---|---|---|---|---|---|
| US 2012164458 | A1 | 28-06-2012 | BR | PI1010769 A2 | 18-07-2017 |
| | | | CA | 2765177 A1 | 16-12-2010 |
| | | | CN | 102460226 A | 16-05-2012 |
| | | | EP | 2440956 A1 | 18-04-2012 |
| | | | JP | 6026274 B2 | 16-11-2016 |
| | | | JP | 2012529663 A | 22-11-2012 |
| | | | KR | 20120050410 A | 18-05-2012 |
| | | | US | 2012164458 A1 | 28-06-2012 |
| | | | WO | 2010142798 A1 | 16-12-2010 |
| EP 4454872 | A1 | 30-10-2024 | EP | 4454872 A1 | 30-10-2024 |
| | | | WO | 2024223785 A1 | 31-10-2024 |
| US 2022348495 | A1 | 03-11-2022 | CN | 114503016 A | 13-05-2022 |
| | | | EP | 3800167 A1 | 07-04-2021 |
| | | | US | 2022348495 A1 | 03-11-2022 |
| | | | WO | 2021064249 A1 | 08-04-2021 |

EPO FORM P0459

For more details about this annex : see Official Journal of the European Patent Office, No. 12/82

**EP 4 763 494 A1**

**Patent documents cited in the description**

- WO 2015004383 A1
- WO 2020115061 A1
- WO 2024126334 A1